# EUROPEAN PATENT SPECIFICATION

(11) **EP 0 635 656 B1**
(45) Date of publication and mention of the grant of the patent: **29.09.1999**
(21) Application number: 94304958.5
(22) Date of filing: 06.07.1994
(51) Int. Cl.: F16F 13/10

(54) **Sealed liquid vibration damping apparatus**
Abgedichtete Schwingungsdämpfende Vorrichtung, mit Flüssigkeit
Dispositif scellé, à liquide, pour l'amortissement des vibrations

(30) Priority: 06.07.1993 JP 19280793; 10.05.1994 JP 12050094
(43) Date of publication of application: 25.01.1995
(73) Proprietor: YAMASHITA RUBBER KABUSHIKI KAISHA, Iruma-Gun, Saitama (JP)
(72) Inventor: Satori, Kazutoshi, c/o Yamashita Rubber, Iruma-gun, Saitama (JP)
(74) Representative: Leale, Robin George

(56) References cited:
- EP-A- 0 042 910
- EP-A- 0 156 697
- EP-A- 0 205 657
- EP-A- 0 212 143
- EP-A- 0 231 898
- EP-A- 0 265 681
- EP-A- 0 331 951
- EP-A- 0 527 302
- EP-A- 0 565 860
- DE-A- 3 829 021
- DE-A- 4 036 517
- PATENT ABSTRACTS OF JAPAN vol. 14, no. 364 (M-1007) 7 August 1990 & JP-A-02 129 426 (TOKAI RUBBER IND LTD)

## Description

This invention relates to a sealed liquid vibration damping apparatus such as a suspension mounting device or an engine mounting device of a vehicle, and more particularly such an apparatus which has non-linear damping characteristics.

Japanese Patent Unexamined Publication No. 64-1566 discloses such a vibration damping apparatus comprising a first bracket for attachment to a body, a second bracket for attachment to a vibrating member, a rubber portion provided between the two brackets, a liquid chamber provided in the rubber portion, and a rubber partition wall dividing the liquid chamber into two sub-chambers, wherein the rubber partition wall is integrally formed with an orifice providing communication between two liquid chambers and a membrane portion with a thin centre region.

It is desirable for such a vibration damping apparatus to display both a low dynamic spring characteristic and a high vibration damping characteristic, the low dynamic spring characteristic effectively absorbing vibrations of higher frequency and smaller amplitude (hereinafter referred to as small vibrations) such as engine vibrations, while the high vibration damping characteristic provides sufficient damping when vibrations of lower frequency and smaller amplitude are present, such as shake vibrations resulting from tire imbalance, or when vibrations of lower frequency and larger amplitude (hereinafter referred to as large vibrations) occur, such as vibrations from a suspension in response to an irregular road surface.

It is possible to provide such a known vibration damping apparatus with a low dynamic spring characteristic by decreasing the spring constant of the membrane portion, but if the deformation of the membrane portion remains unchanged it then becomes impossible to obtain sufficient high vibration damping, since the elastic deformation of the membrane portion becomes correspondingly larger when a large vibration is applied. Accordingly, it becomes necessary to provide the membrane portion with a deformation control portion for controlling deformation in excess of a predetermined amount. However, if the membrane portion is provided with such a deformation control portion, it is not only controlled in its deformation but also imparts a sudden damping force, which can make a passenger feel an uncomfortable shock. Also, since a striking sound occurs when the membrane portion contacts the deformation control portion, it may become an undesired source of noise. Further, a step-like change of the spring constant in such a membrane portion means that the resonance frequency in the orifice portion also changes in such a step-like manner, and as a result it becomes difficult to maintain the optimum resonance frequency in all areas where the damping is needed. Still further, it is necessary to increase the number of parts because of the provision of the deformation control portion.

A sealed liquid vibration damping apparatus having the features of the preamble to claim 1 is disclosed in EP-A-0042910. The present invention is characterised over this disclosure by the features of the annular lip-like portion extending from the membrane portion transverse to the input vibration direction is arranged to abut against the said fixed part in a direction transverse to the said input vibration direction.

According to the features of claim 1, since the partition wall is provided with the membrane portion, it is possible to provide elasticity by way of this membrane portion even if the orifice passage is apparently closed by resonance, and to absorb vibrations by an elastic deformation corresponding to the input vibration. Also, since the abutment portion integrally formed with the membrane portion abuts against the fixed part, it is possible to give the spring characteristic of the membrane portion a non-linear characteristic by deformation of the abutment portion, thereby controlling the fluid resonance effect. Accordingly, it is possible to make the damping characteristic correspond to the input displacement, i.e. a high damping characteristic when a large vibration is input and a low dynamic spring characteristic when a small vibration is input. Also, it is not only possible to form the abutment portion at the periphery of the membrane portion and to facilitate the mounting of the fixed part, but also to avoid interfering with the elastic deformation of the membrane portion where the elastic deformation is largest, i.e. at its centre.

According to the features of claims 4 and 5, if the abutment portion is arranged to abut against the fixed part in the initial undeformed condition of the membrane portion, it is possible to obtain a non-linear characteristic which changes smoothly. On the other hand, if the abutment portion is arranged not to abut against the fixed part in the initial undeformed condition of the membrane portion, it is possible to obtain a non-linear characteristic which changes in a step-like manner. Thus it is possible to obtain various types of non-linear characteristics.

According to the feature of claim 6, since the fixed part against which the abutment portion abuts is the partition wall supporting member, it is easy to secure the fixed part in place.

According to the feature of claim 7, it is possible to make the cross-sectional area of the orifice passage more stable.

According to the feature of claim 8, it is possible to make the molding of each part as a smaller piece and also to combine materials of different kinds of physical properties together.

According to the feature of claim 9, it is not only possible for the partition wall to embody the membrane function and the orifice function and the abutment function, but also to make its construction simpler, make the formation of the orifice portion easier and reduce the number of components.

According to the feature of claim 10, if the membrane portion is formed to be thin, its elastic deformation becomes easier and the spring constant can thereof be lowered.

According to the feature of claim 11, if the membrane portion is designed to have the same thickness as that of the orifice portion, it is possible to make the spring constant higher.

According to the feature of claim 12, it is not only possible to reinforce the central area of the membrane portion, but also to optionally control the spring constant.

According to the feature of claim 13, it is possible to prevent a change in the cross-sectional area of the orifice passage resulting from deformation of the orifice portion.

According to the feature of claim 14, it is possible to simplify the construction of the components where the abutment portion is received.

According to the feature of claim 15, it is possible to obtain a non-linear spring characteristic which changes in a multi-stage manner.

According to the feature of claim 16, it is possible to prevent noise caused when the abutment portion abuts against the fixed part, and also to provide for variation in the deformation of the abutment portion.

According to the feature of claim 17, it is possible to make the spring constant of the membrane portion non-linear.

Some embodiments of the invention will now be described by way of example and with reference to the accompanying drawings, in which:
Fig. 1 is an enlarged cross sectional view showing some relevant parts of a sealed liquid vibration damping apparatus of a first embodiment of the present invention;
Fig. 2 is a cross sectional view of the whole apparatus of the first embodiment, which is an engine mount;
Fig. 3 is an enlarged cross sectional view of certain parts of a modified embodiment;
Fig. 4 is a graph showing spring characteristics in a membrane portion of an embodiment of the invention, as compared with a known device, wherein the abscissa represents displacement and the ordinate represents an applied force;
Fig. 5 is a graph showing damping characteristics of an embodiment of the invention, wherein the abscissa represents a frequency of input vibration and the ordinate represents damping coefficient;
Fig. 6 is a graph showing dynamic spring characteristics of an embodiment of the invention, wherein the abscissa represents frequency of input vibration and the ordinate represents dynamic spring coefficient;
Fig. 7 is an exploded perspective view, partially cut away, to show relevant parts of the first embodiment; and
Figs. 8 to 12 are cross sectional views showing relevant parts of second to sixth embodiments of the invention.

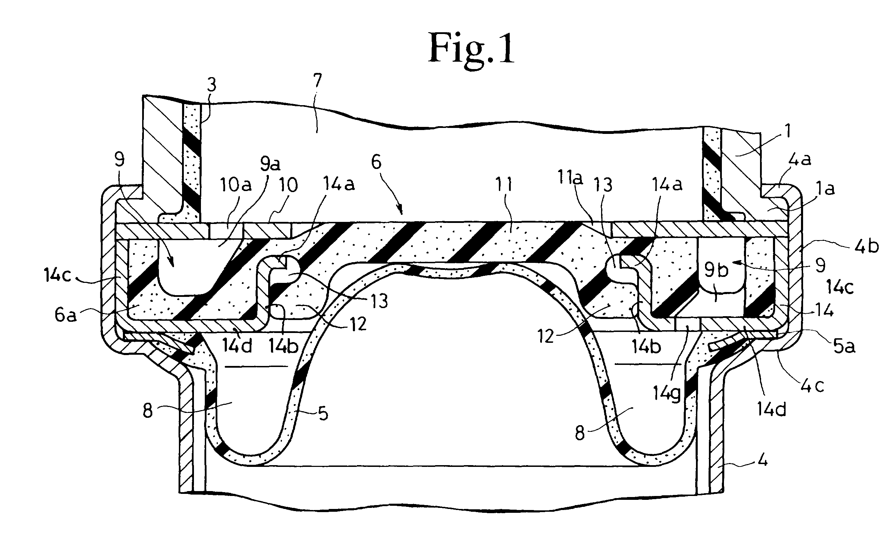

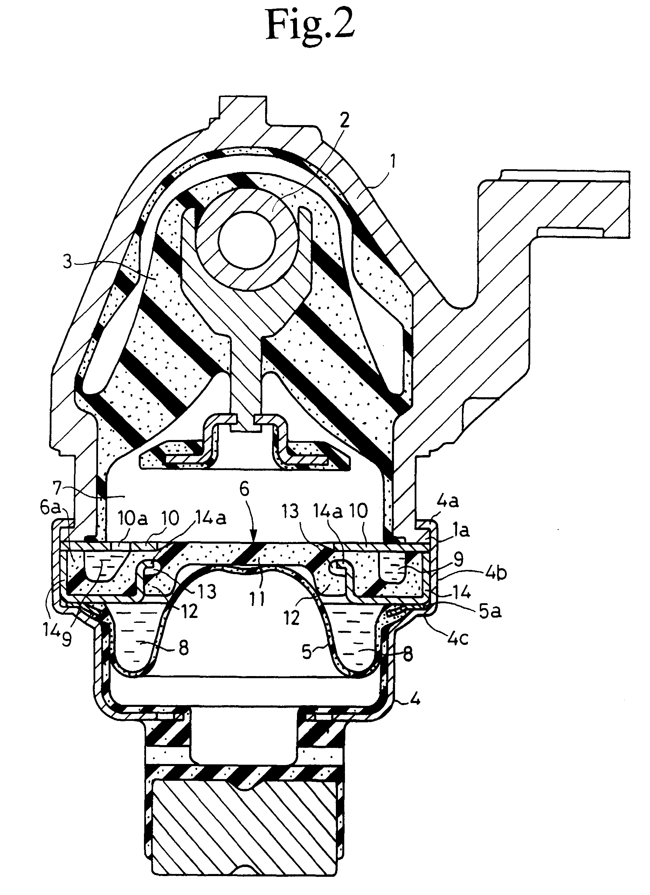

Referring to Figs. 1 and 2, an engine mount according to the invention comprises a first connecting member 1 for attachment to an engine, a second connecting member 2 for connection to a vehicle body, and a rubber member 3 located between the two connecting members. However, it is to be noted that the connecting relation of the two connecting members to the engine and body may be reversed.

The first connecting member 1 is formed in the shape of a downwardly open cup, to the open end of which a housing 4 is secured so as to define a substantially closed space in conjunction with the connecting member. The closed space is partitioned by a diaphragm 5 to form, on the side of the rubber member 3, a sealed liquid chamber filled with a non-compressible liquid.

This liquid chamber is in turn divided by a rubber partition wall 6 into two chambers: a first chamber 7 on the side of the rubber member 3, and a second chamber 8 below the wall 6. These chambers communicate by way of a substantially annular orifice passage 9 formed in an orifice portion 6a adjacent the periphery of the wall 6. The open side of the orifice passage 9 is covered by a ring plate 10. The ring plate 10 is formed with a communicating slot 10a to communicate one end of the passage 9 with the first chamber 7, whilst the other end of the passage communicates with the second chamber 8 as described below.

The rubber partition wall 6 comprises the orifice portion 6a formed with the orifice passage 9, a membrane portion 11 located at its centre, and an annular abutment portion 12 formed thereunder.

As may be seen from Fig. 1, the abutment portion 12 includes a lip-like portion separated at its tip end from the rubber partition wall 6 by a separation groove 13, and in the present embodiment the front end of the lip is arranged to abut against an inner wall 14b of a partition wall supporting member 14, even before any elastic deformation of the membrane portion 11 has taken place. The inner wall 14b is an embodiment of an immovable part against which the lip of the abutment portion 12 abuts, the abutment portion being arranged to abut on the wall 14b in a direction transverse to the input direction of major vibrations, i.e. a direction parallel to the central axis of the membrane portion 11.

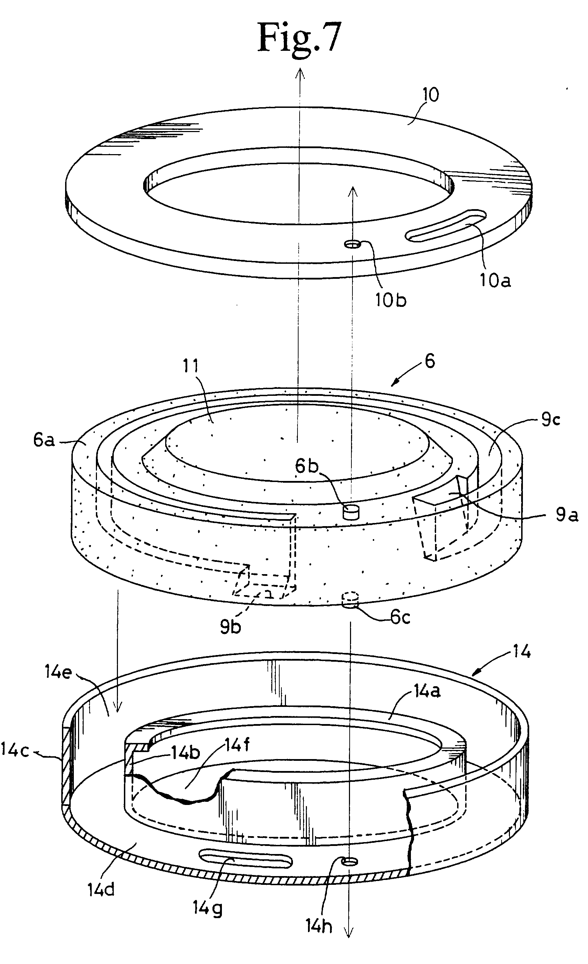

As may be seen from Fig. 7, the partition wall supporting member 14 is a ring-shaped member of generally U-shaped cross section, located on the opposite side of the partition wall from the ring plate 10. The orifice portion 6a of the rubber partition wall 6 is dimensioned to fit inside the generally U-shaped space. The front end 14a of the inner periphery of the member 14 is received in the separation groove 13, with the top portion of the front end 14a parallel to the ring plate 10.

As previously mentioned, the abutment portion 12 normally abuts against the partition wall supporting member 14. If the membrane portion 11 is deformed in the downward direction as seen in the drawings, the abutment portion 12 is pushed harder against the member 14 and deformed so that it produces a non-linearly increasing reaction force against an increase in the deformation of the membrane portion 11. Thus the abutment portion 12 serves to control the extent of deformation of the membrane portion 11.

The partition wall supporting member 14 together with the rubber partition wall 6 are covered by the ring plate 10. These parts are mounted on a securing plate 5a embedded in the periphery of the diaphragm 5, which in turn is mounted on a step portion 4c of a larger diameter portion 4b which surrounds the partition wall supporting member 14. An outwardly extending flange la formed at the lower end of the first connecting member 1 rests on the ring plate 10. Then the ring plate 10 and the tip of the outer wall 14c of the partition wall supporting member 14 are secured to the flange la by caulking the rim 4a of the housing 4.

At this stage, the ring plate 10 can be pressed down into the top face of the partition wall 6 by adjusting the extent of caulking the rim 4a of the housing 4, whereby a depression 11a is formed by pressing the lower face of the ring plate 10 down below the top face of the membrane portion 11. However, as shown in another embodiment described below, this depression is not always provided.

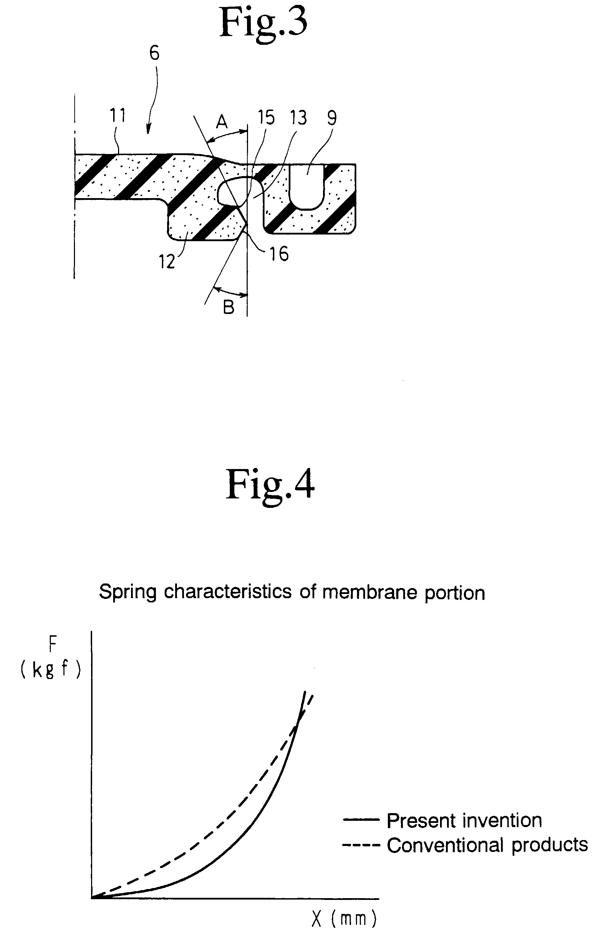

Fig. 3 shows a modified version of the abutment portion 12 in which tapered surfaces 15 and 16 are provided at its front end. If the extent of the front end of the abutment portion 12 which abuts the partition wall supporting member 14 is changed by changing the angles A,B of its tapered surfaces, it is not only possible to change the way in which the contact area between the abutment portion 12 and the member 14 increases in response to the elastic deformation of the membrane portion 11, but also to obtain various nonlinear characteristics because the shape of the front end may be changed in many different ways. It is also possible to achieve similar changes of characteristics by varying the thickness of the abutment portion 12 in a multi-stage manner.

Fig. 7 is a view showing the construction of the partition wall 6 and associated parts in detail. The ring plate 10 is an annular metal plate and formed with the orifice communicating slot 10a previously mentioned, and a positioning hole 10b.

The rubber partition wall 6 is formed at its central region with the membrane portion 11, which is thinner and more yieldable than the orifice portion 6a. In the upper surface of the orifice portion 6a, to be covered by the ring plate 10, there is provided an upwardly opened ring groove 9c of generally U-shaped cross section which extends over nearly the whole periphery of the orifice portion 6a and defines most of the orifice passage 9.

Thus the orifice passage 9 is formed substantially in a ring-shape by the ring groove 9c and the ring plate 10 which covers the latter (see Fig. 2). A wider portion 9a formed at one end of the ring groove 9c is arranged to coincide with the orifice communicating slot 10a of the ring plate 10. The other end of the ring groove 9c communicates with a through aperture 9b which extends downwardly to open in the underside of the wall 6 where it coincides with the orifice communicating slot 14g of the partition wall supporting member 14.

The partition wall supporting member 14 is a cup-shaped member made of metal, formed with a ring groove 14e for receiving the orifice portion 6a of the partition wall 6 therein. The ring groove 14e is defined by a pair of coaxial outer and inner walls 14c and 14b and a bottom portion 14d. The member 14 is further formed with a central opening 14f, inwardly of the ring groove 14e, which is adapted to receive the membrane portion 11. The bottom portion 14d is formed with the said orifice communicating slot 14g and a positioning hole 14h, while the rubber partition wall 6 is formed on its upper and lower surfaces with corresponding positioning projections 6b and 6c respectively.

When the three members comprising the ring plate 10, the rubber partition wall 6 and the partition wall supporting member 14 are to be assembled together, the two positioning projections 6b and 6c are first engaged in the two positioning holes 10b and 14h of the ring plate 10 and the member 14 respectively, so that the wider portion 9a and the communicating slot 10a can be mutually aligned and at the same time the through aperture 9b can be aligned with the orifice communicating slot 14g of the member 14. As a result the first and second chambers 7 and 9 are placed in communication by way of the orifice passage 9.

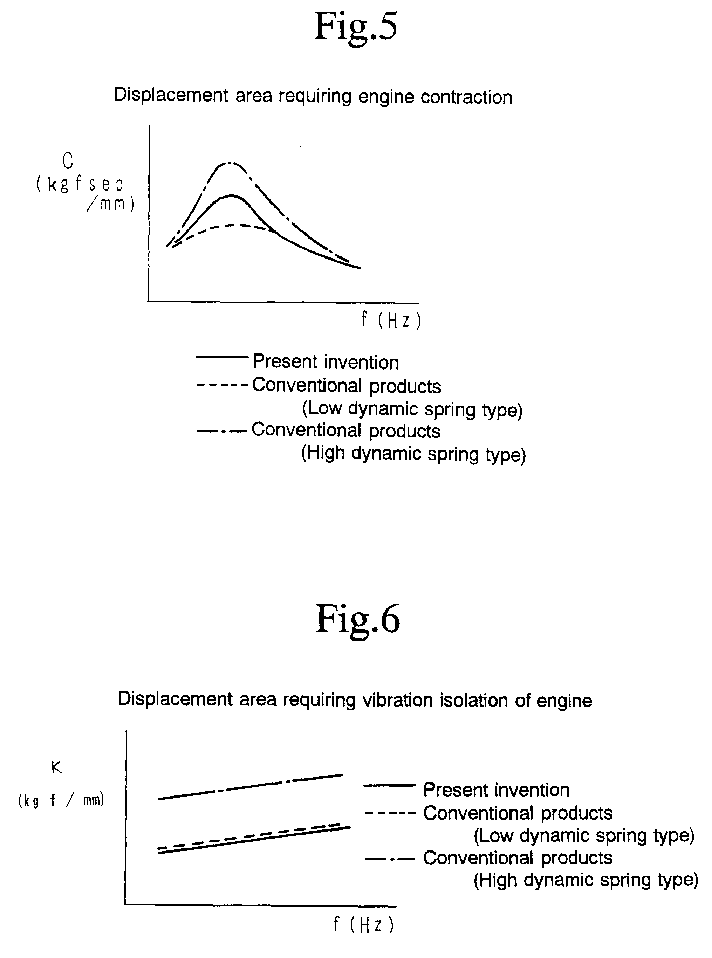

Figs. 4 through 6 shows spring characteristics of the membrane portion of apparatus according to the invention. As is apparent from the graphs, it is possible to obtain spring characteristics which become more non-linear. Also, in the case of an engine mount, the damping characteristic at locations where the extinction of vibrations is particularly needed shows a high damping characteristic, as illustrated in Fig. 5, while the dynamic spring characteristic at locations where vibrations only need to be isolated shows a low dynamic spring characteristic, as shown in Fig. 6. It is thus possible to achieve high damping with low dynamic spring characteristics.

Further, it is possible to modify the elastic constant of the membrane portion 11 to be a smooth and continuous curve without steps, by causing the abutment portion 12 to about against the inner wall 14b from the outset, before any elastic deformation of the membrane portion 11 occurs.

Still further, since the front end of the abutment portion 12 is arranged to abut against the inner wall 14b in a direction transverse to the input direction of major vibrations, it is possible to form the abutment portion 12 at the periphery of the membrane portion 11 and thus facilitate the secure mounting of the same, and also not to interfere with the elastic deformation at the centre of the membrane portion where the amount of elastic deformation is largest.

Also, if large vibrations are input from a vehicle suspension, it is possible to improve the endurance of the membrane portion 11 because the abutment portion 12 is arranged to control the displacement of the membrane portion. Since the membrane portion is formed with a depression where the ring plate 10 is mounted, it is possible to cause the membrane portion not to produce a striking sound when it deforms.

As shown in Fig. 3, if the spring constant of the membrane portion 11 is combined with a tapered tip end configuration of the abutment portion 12, it is possible to achieve balance tuning between various damping and dynamic spring characteristics.

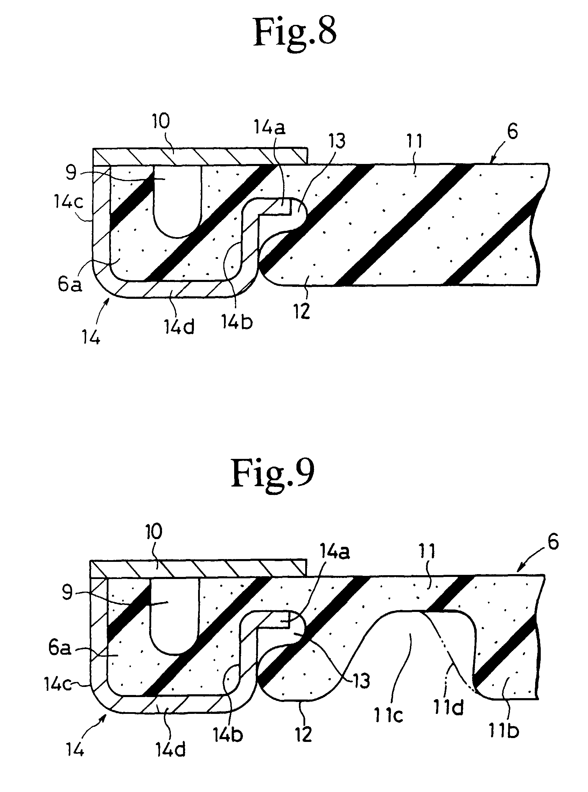

Fig. 8 shows the modified parts of a second embodiment. The membrane portion 11 of the partition wall 6 differs from the first embodiment in that it has the same thickness as the orifice portion 6a and thus there is no stepped portion adapted to form a depression when the ring plate 10 is mounted on the orifice portion 6a.

In this embodiment, since the spring constant of the membrane portion 11 can be increased, it becomes possible to control the spring constant by adjusting the thickness.

Fig. 9 shows a third embodiment in which the membrane portion 11 has a thin portion 11c of annular configuration between the thick portion 11b and the stopper portion 12. With this arrangement it is possible to obtain an intermediate spring constant between those of the first and second embodiments, and it is also possible to reinforce the strength of the membrane portion 11. Further, the shape of the thick portion 11b can be optionally changed, as shown by an imaginary line 11d. In this way it is possible to change the spring constant optionally.

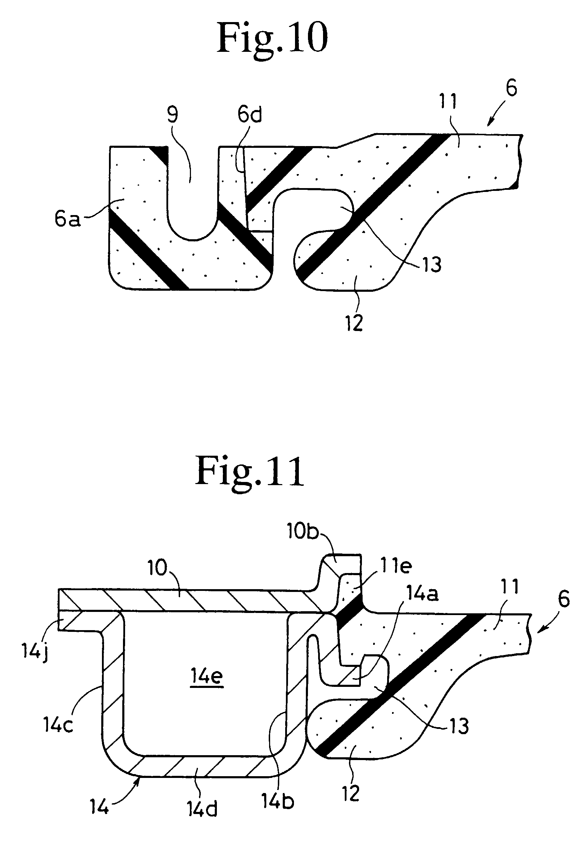

Fig. 10 shows another embodiment in which the orifice portion 6a of the partition wall 6 is formed separately from the membrane portion 11, such parts being connected by adhesive or the like at a joint 6d. Then, since the orifice portion and the membrane portion can be made as smaller pieces it is not only possible to make them more easily, but also to optionally make them from materials having different properties. For example, if a harder material is used only for the orifice portion 6a, this can prevent the orifice passage 9 from deforming during operation.

Fig. 11 shows another embodiment in which the orifice portion of the partition wall is made of metal, while the rubber part of the partition wall 6 consists only of the membrane portion 11. In this case, the membrane portion 11 is integrally formed at its periphery with a bead-shaped mounting portion lle which is clamped between an inner peripheral end 10b of the ring plate 10 and an inner peripheral tip end 14a of the partition wall supporting member 14. A top end of the outer wall 14c has a horizontal outer flange 14j which is united with the outer periphery of the ring plate 10. The space 14e thus enclosed by the ring plate 10 and the partition wall supporting member 14 can be utilised as the orifice passage 9, whose cross-sectional area is then not affected by the elastic deformation of the membrane portion 11.

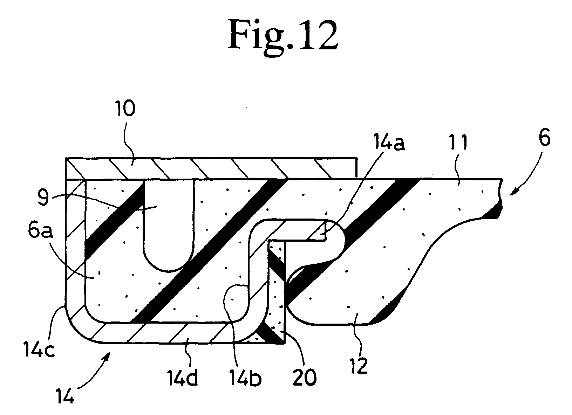

Fig. 12 shows still another embodiment of the invention in which an elastic layer 20 is provided on the inside of the inner wall 14b of the member 14, against which the abutment portion 12 abuts. This makes it possible to prevent the abutment portion 12 from making a striking noise when it contacts the elastic layer 20. Also the characteristics of the elastic layer 20, such as its thickness, its constituent material used and its elasticity, may be changed in order to vary the deformation of the abutment portion 12 and thereby control the spring constant of the membrane portion 11. It is also possible to selectively use known materials for the elastic layer in the way of molding materials made of rubber or synthetic resin with high elasticity.

It is noted that the abutment portion 12 does not necessarily have to abut against the inner wall 14b of the member 14, but could alternatively abut against the inner wall of the housing 4.

Furthermore, since the abutment portion 12 can be arranged not to about against the inner wall 14b initially, but only to do so when the membrane portion 11 starts its elastic deformation, and then to abut against the wall at a predetermined stage of such deformation, it is further possible to cause the change of elastic constant to be in a step-like curve having a point of inflection.

## Claims

1. A sealed liquid vibration damping apparatus comprising first and second connecting members (1,2) for connection respectively to two parts between which vibration is to be damped, an elastic body (3) between said first and second connecting members (1,2), a space (7,8) adapted to be filled with liquid between said elastic body and one of said connecting members (1,2), a partition wall (6) dividing the said liquid space into two liquid chambers (7,8), and an orifice (9) providing communication between said liquid chambers (7,8) by way of the said partition wall (6), the said partition wall (6) having a membrane portion (11) which can deform elastically in response to an input vibration and an abutment portion (12) formed integrally with said membrane portion (11) and arranged to abut against a fixed part (14) when the membrane portion is elastically deformed, said fixed part (14) being fixedly secured to the first connecting member (1), the said abutment portion (12) being an annular lip-like portion (12) extending from the membrane portion (11) transverse to the input vibration direction, characterised in that the annular lip-like portion (12) is arranged to abut against the said fixed part (14) in a direction transverse to the said input vibration direction.

2. Apparatus as claimed in claim 1, wherein the abutment surface (14b) of the said fixed part (14) is substantially perpendicular to the said direction of abutment of the abutment portion (12) of the partition wall (6).

3. Apparatus as claimed in claim 1 or 2, wherein the radially outermost part of the said lip-like portion is arranged to abut against the said fixed part (14).

4. Apparatus as claimed in any preceding claim, wherein the said abutment portion (12) is arranged not to abut against the said fixed part (14) in the initial undeformed condition of the membrane portion (11).

5. Apparatus as claimed in any of claims 1 to 3, wherein the said abutment portion (12) is arranged to abut against the said fixed part (14) in the initial undeformed condition of the membrane portion (11).

6. Apparatus as claimed in any preceding claim, wherein the said partition wall (6) is supported by a partition wall supporting member (14) attached to at least one of the said connecting members (1,2), which partition wall supporting member serves also as the said fixed part against which the said abutment portion (12) engages.

7. Apparatus as claimed in claim 6, wherein the said partition wall (6) comprises an elastically deformable portion which consists only of the said membrane portion (11), the said orifice (9) being formed within a space enclosed by the partition wall support member (14).

8. Apparatus as claimed in any preceding claim, wherein the said membrane portion (11) of the partition wall (6) and an orifice portion (6a) thereof comprise two separate parts connected together.

9. Apparatus as claimed in any of claims 1 to 7, wherein the said partition wall (6) comprises the said membrane portion (11) and an orifice portion (6a) formed integrally with each other.

10. Apparatus as claimed in claim 8 or 9, wherein the said membrane portion (11) is thinner than the said orifice portion (6a).

11. Apparatus as claimed in claim 8 or 9, wherein the said membrane portion (11) is the same thickness as the said orifice portion (6a).

12. Apparatus as claimed in claim 8 or 9, wherein the said membrane portion (11) has a relatively thick central portion (11b) and a relatively thin portion (11c) between it and the said orifice portion (6a).

13. Apparatus as claimed in any of claims 8 to 12, wherein a groove (13) is provided between the said orifice portion (6a) and the membrane portion (11), the said orifice portion being received in a partition wall supporting member (14) of generally U-shaped cross-section whose inner wall (14b) is received in the said groove.

14. Apparatus as claimed in claim 13, wherein the said abutment portion (12) is arranged to abut against the said inner wall (14b) of the partition wall supporting member (14).

15. Apparatus as claimed in any preceding claim, wherein the said abutment portion is formed at its front end with a plurality of slant surfaces (15,16) of different angles.

16. Apparatus as claimed in any preceding claim, wherein an elastic portion (20) is provided on a surface against which the said abutment portion abuts.

17. Apparatus as claimed in any preceding claim, wherein the said abutment portion (12) is so arranged that the contact area thereof against the said fixed portion (14) increases in response to an increase in the elastic deformation of the said membrane portion (11).

## Patentansprüche

1. Abgedichtete Flüssigkeit verwendende Schwingungdämpfungsvorrichtung mit ersten und zweiten Verbindungselementen (1,2) zur Verbindung mit einem ersten bzw. einem zweiten Teil, wobei zwischen den zwei Teilen eine Schwingung gedämpft werden soll, einem elastischen Körper (3) zwischen dem ersten und dem zweiten Verbindungselement (1,2), einem mit einer Flüssigkeit ausfüllbaren Raum (7,8) zwischen dem elastischen Körper und einem der Verbindungselemente (1,2), einer Teilungswand (6), welche den Flüssigkeitsraum in zwei Flüssigkeitskammern (7,8) teilt, und einer Öffnung (9), welche eine Kommunikation zwischen den Flüssigkeitskammern (7,8) über die Teilungswand (6) zur Verfügung stellt, wobei die Teilungswand (6) einen Membranabschnitt (11), welcher ansprechend auf eine Eingangsschwingung elastisch verformbar ist, und einen Anstoßabschnitt (12), der einstückig mit dem Membranabschnitt (11) ausgebildet ist und zum Anstoßen gegen ein festes Teil (14) angeordnet ist, wenn der Membranabschnitt elastisch verformt wird, aufweist, wobei das feste Teil (14) an dem ersten Verbindungselement (1) befestigt ist, und der Widerlagerabschnitt (12) als ringförmiger lippenartiger Abschnitt (12) ausgebildet ist, der sich von dem Membranabschnitt (11) quer zur Eingangsschwingungsrichtung erstreckt,
dadurch gekennzeichnet,
daß der ringförmige lippenartige Abschnitt (12) zum Anstoßen gegen das feste Teil (14) in einer Richtung quer zu der Eingangsschwingungsrichtung angeordnet ist.

2. Vorrichtung nach Anspruch 1, bei welcher die Anstoß- bzw. Anschlagsfläche (14b) des festen Teils (14) im wesentlichen senkrecht zu der Anstoßrichtung des Anstoßabschnitts (12) der Teilungswand (6) ist.

3. Vorrichtung nach einem der Ansprüche 1 oder 2, bei welcher der radial äußerste Teil des lippenartigen Abschnitts zum Anstoßen gegen das feste Teil (14) angeordnet ist.

4. Vorrichtung nach einem der vorstehenden Ansprüche, bei welcher der Anstoßabschnitt (12) derart angeordnet ist, daß er in dem ursprünglichen unverformten Zustand des Membranelements (11) nicht gegen das feste Teil (14) anstößt.

5. Vorrichtung nach einem der Ansprüche 1 bis 3, bei welcher der Anstoßabschnitt (12) derart angeordnet ist, daß er im ursprünglichen unverformten Zustand des Membranabschnitts (11) gegen das feste Teil (14) anstößt.

6. Vorrichtung nach einem der vorstehenden Ansprüche, bei welcher die Teilungswand (6) mittels eines Teilungswandhalterungselements (14) gehaltert ist, welches an wenigstens einem der Verbindungselemente (1, 2) angebracht ist, wobei das Teilungswandhalterungselement auch als das erwähnte feste Teil dient, welches der Anstoßbereich (12) angreift.

7. Vorrichtung nach Anspruch 6, bei welcher die Teilungswand (6) einen elastisch verformbaren Abschnitt aufweist, welcher nur aus dem Membranabschnitt (11) besteht, wobei die Öffnung (9) innerhalb eines Raumes geformt ist, welcher von dem Teilungswandhalterungselement (14) umgeben ist.

8. Vorrichtung nach einem der vorstehenden Ansprüche, bei welcher der Membranabschnitt (11) der Teilungswand (6) und ein Öffnungsabschnitt (6a) zwei unterschiedliche, miteinander verbundene Teile aufweisen.

9. Vorrichtung nach einem der Ansprüche 1 bis 7, bei welcher die Teilungswand (6) den Membranabschnitt (11) und einen Öffnungsabschnitt (6a) aufweist, wobei diese Abschnitte (11, 6a) einstückig miteinander ausgebildet sind.

10. Vorrichtung nach einem der Ansprüche 8 oder 9, wobei der Membranabschnitt (11) dünner als der Öffnungsabschnitt (6a) ausgebildet ist.

11. Vorrichtung nach einem der Ansprüche 8 oder 9, bei welcher der Membranabschnitt (11) die gleiche Dicke wie der Öffnungsabschnitt (6a) aufweist.

12. Vorrichtung nach einem der Ansprüche 8 oder 9, bei welcher der Membranabschnitt (11) einen relativ dicker mittleren Abschnitt (llb) und einen relativ dünnen Abschnitt (llc) zwischen ihm und dem Öffnungsabschnitt (6a) aufweist.

13. Vorrichtung nach einem der Ansprüche 8 bis 12, bei welcher eine Nut (13) zwischen dem Öffnungsabschnitt (6a) und dem Membranabschnitt (11) vorgesehen ist, wobei der Öffnungsabschnitt in einem Teilungswandhalterungselement (14) mit allgemein U-förmigem Querschnitt aufgenommen ist, dessen Innenwand (14b) in der Nut aufgenommen ist.

14. Vorrichtung nach Anspruch 13, bei welcher der Anstoßabschnitt (12) zum Anstoßen gegen die Innenwand (14b) des Teilungswandhalterungselements (14) ausgebildet ist.

15. Vorrichtung nach einem der vorstehenden Ansprüche, bei welcher der Anstoßabschnitt an seinem vorderen Ende mit einer Anzahl geneigter Flächen (15, 16) unterschiedlichen Neigungswinkels gebildet ist.

16. Vorrichtung nach einem der vorstehenden Ansprüche, bei welcher ein elastischer Abschnitt (20) auf einer Oberfläche vorgesehen ist, gegen welche der Anstoßabschnitt anstößt.

17. Vorrichtung nach einem der vorstehenden Ansprüche, bei welcher der Anstoßabschnitt (12) derart angeordnet ist, daß sein Kontaktbereich bezüglich des festen Teils (14) ansprechend auf eine Zunahme der elastischen Verformung des Membranabschnitts (11) zunimmt.

## Revendications

1. Dispositif scellé d'amortissement hydraulique de vibrations comprenant des premier et second éléments de raccordement (1, 2) pour le raccordement à deux pièces entre lesquelles il faut amortir des vibrations, un corps élastique (3) entre lesdits premier et second éléments de raccordement (1, 2), un espace (7, 8) prévu pour être rempli de liquide entre ledit corps élastique et un desdits éléments de raccordement (1, 2), une paroi séparatrice (6) divisant ledit espace de liquide en deux chambres hydrauliques (7, 8), et un orifice (9) réalisant une communication entre lesdites chambres hydrauliques (7, 8) au moyen de ladite paroi séparatrice (6), ladite paroi séparatrice (6) comportant une portion formant membrane (11) qui peut se déformer élastiquement en réponse à une vibration appliquée et une portion formant butée (12) formée d'un bloc avec ladite portion formant membrane (11) et agencée pour appuyer contre une pièce fixe (14) lorsque la portion formant membrane est déformée élastiquement, ladite pièce fixe (14) étant raccordée de façon fixe au premier élément de raccordement (1), ladite portion formant butée (12) étant une portion annulaire en forme de lèvre (12) s'étendant depuis la portion formant membrane (11) transversalement à la direction des vibrations appliquées, caractérisé en ce que la portion annulaire en forme de lèvre (12) est agencée pour appuyer contre ladite pièce fixe (14) transversalement à ladite direction des vibrations appliquées.

2. Dispositif selon la revendication 1, dans lequel la surface de butée (14b) de ladite pièce fixe (14) est sensiblement perpendiculaire à ladite direction de butée de la portion formant butée (12) de la paroi séparatrice (6).

3. Dispositif selon la revendication 1 ou 2, dans lequel la partie radialement la plus extérieure de ladite portion en forme de lèvre est agencée pour appuyer contre ladite pièce fixe (14).

4. Dispositif selon l'une des revendications précédentes, dans lequel ladite portion formant butée (12) est agencée pour ne pas appuyer contre ladite pièce fixe (14) dans la condition initiale non déformée de la portion formant membrane (11).

5. Dispositif selon l'une quelconque des revendications 1 à 3, dans lequel ladite portion formant butée (12) est agencée pour appuyer contre ladite pièce fixe (14) dans la condition initiale non déformée de la portion formant membrane (11).

6. Dispositif selon l'une quelconque des revendications précédentes, dans lequel ladite paroi séparatrice (6) est supportée par un élément de support de paroi séparatrice (14) fixé à au moins un desdits éléments de raccordement (1, 2), lequel élément de support de paroi séparatrice sert également en tant que pièce fixe contre laquelle s'engage ladite portion formant butée (12).

7. Dispositif selon la revendication 6, dans lequel ladite paroi séparatrice (6) comprend une partie déformable élastiquement qui est constituée seulement de ladite portion formant membrane (11), ledit orifice (9) étant formé à l'intérieur d'un espace enfermé par l'élément de support de paroi séparatrice (14).

8. Dispositif selon l'une quelconque des revendications précédentes, dans lequel ladite portion formant membrane (11) de la paroi séparatrice (6) et une portion à orifice (6a) de celle-ci comprennent deux parties séparées raccordées entre elles.

9. Dispositif selon l'une quelconque des revendications 1 à 7, dans lequel ladite paroi séparatrice (6) comprend ladite portion formant membrane (11) et une portion à orifice (6a) formées solidairement l'une avec l'autre.

10. Dispositif selon la revendication 8 ou 9, dans lequel ladite portion formant membrane (11) est plus mince que ladite portion à orifice (6a).

11. Dispositif selon la revendication 8 ou 9, dans lequel ladite portion formant membrane (11) est de même épaisseur que ladite portion à orifice (6a).

12. Dispositif selon la revendication 8 ou 9, dans lequel ladite portion formant membrane (11) a une partie centrale relativement épaisse (11b) et une partie relativement mince (11c) entre elle et ladite portion à orifice (6a).

13. Dispositif selon l'une quelconque des revendications précédentes 8 à 12, dans lequel une gorge (13) est prévue entre ladite portion à orifice (6a) et la portion formant membrane (11), ladite portion à orifice étant reçue dans un élément de support de paroi séparatrice (14) de forme générale en U en coupe dont la paroi intérieure (14b) est reçue dans ladite gorge.

14. Dispositif selon la revendication 13, dans lequel ladite portion formant butée (12) est agencée pour appuyer contre ladite paroi intérieure (14b) de l'élément de support de paroi séparatrice (14).

15. Dispositif selon l'une quelconque des revendications précédentes, dans lequel ladite portion formant butée est formée à son extrémité avant d'une pluralité de surfaces inclinées (15, 16) suivant différents angles.

16. Dispositif selon l'une quelconque des revendications précédentes, dans lequel une partie élastique (20) est prévue sur une surface contre laquelle appuie ladite portion formant butée.

17. Dispositif selon l'une quelconque des revendications précédentes, dans lequel ladite portion formant butée (12) est agencée de façon que la zone de contact de celle-ci contre ladite portion fixe (14) augmente en réponse à une augmentation de la déformation élastique de ladite portion formant membrane (11).
